# EUROPEAN PATENT SPECIFICATION

(11) **EP 2 051 460 B1**
(45) Date of publication and mention of the grant of the patent: **07.07.2010**
(21) Application number: 09151703.7
(22) Date of filing: 31.08.2007
(51) Int. Cl.: H04L 12/56, H04B 7/02, H04W 72/12

(54) **Wireless multiple connections and method thereof**
Drahtlose Mehrfachverbindungen und Verfahren
Connexions sans fil multiples et leur procédé

(43) Date of publication of application: 22.04.2009
(62) Divisional of application: 07291057.3
(73) Proprietor: Alcatel Lucent, 75008 Paris (FR)
(72) Inventor: Conte, Alberto, 94230 Cachan (FR); De Juan Huarte, Frederico, 75014 Paris (FR); Balageas, Carine, 91190 Gif Sur Yvette (FR)
(74) Representative: Richardt, Markus Albert

(56) References cited:
- EP-A- 1 296 530
- WO-A-03/049482
- WO-A-2005/062636
- WO-A-2006/028409
- US-A1- 2006 025 148

## Description

### Technical field

The invention relates to a wireless transmission of a single packet flow, and more particularly without limitation to a method of wireless transmission of a single packet flow, to a network element, to a wireless terminal, and to a computer program product adapted to perform the method in accordance with the invention.

### Background and related art

A connection between a terminal and a network element of a wireless communication network is generally established via an air interface. The air interface can for example be compliant with the IEEE 802.16 standard. The functions of a protocol can be divided into a series of layers in accordance with the open systems interconnection reference model (OSI model), starting on the applications layer up to the air interface. One of these layers is the so called data link layer.

One of the main tasks of the link layer includes establishing a logical link connection between a transmitter and a receiver and using an identification number to identify the logical connections. The sub-layer responsible for controlling this traffic on the communications channel used by different network devices is called the Media Access Network (MAC).

There are different types of logical connections between network elements. One of the most common is the unicast mode that sends information packets to a single destination, setting up independent connections and copying the information from end-to-end to every user that requires it. The extreme opposite is the broadcasting mode, which uses the network capabilities to send information to all destinations without congesting the network capacity, using either broadcast channels or different routing methods. A more controlled approach is reached using the multicast mode, as it transports the packets to a group of destinations simultaneously, delivering the message over each link of the network only once and creating copies only when the links to the destinations split. All mentioned methods use in general a single transmitter to send the information to one or more users. If it is necessary to transmit simultaneously a message from different transmitters, there is a commonly technique known as simulcast. In this case, there is a transmission area covered by several transmitters or network elements. One of the disadvantages of this type of connections in standards as IEEE 802.16 is that the connection mode is established at the beginning of the connection, before the delivery of the packet flow, leading to a congestion of the network or to a waste of network resources.

WO2005062636A1 discloses a router in a universal mobile telecommunication system. The router resides in an internet protocol based UMTS terrestrial radio access network that carries dedicated channel frames on dedicated channels between an RNC and a node B, wherein the router comprises means for splitting one DCH traffic flow into at least two DCH traffic flows by using IP multicast protocol.

W003049482A1 discloses a method to reduce unnecessary traffic between the combining splitting point and the base stations during a soft handover. This is achieved by controlling information transferred in the radio system, comprising setting up connections between the terminal equipment, measuring properties of the connections between the terminals and the transceivers, selecting at least one of the transceivers as a primary transceiver and restricting part of the information between at least one secondary transceiver and a combining splitting point of the radio system.

US2006025148A1 relates to a system for the consumption of single-cast or multicast multimedia information via a wireless personal area network. The user of an access device may engage in a call served by a wireless wide area network and may consume components of multimedia information. Additional components of the multimedia information may be provided to the user via a second communication path. Selected components of the multimedia information may be communicated to a broadband access gateway where it may be cached or simulcast to a plurality of access devices.

WO2006028409A1 discloses two multiple radio access technologies and heterogeneous networks and admission control for multiple technology access, the admission control serving one or more communication sessions over more than one access technology at the same time.

There is therefore a need for a method of establishing wireless multiple connections in a communication network, an improved component of the wireless communication network, an improved terminal, and a computer program product that is adapted for performing the method in accordance with the invention.

### Summary of the invention

The present invention provides a method for wireless transmission of a single packet flow from a network element. The method comprises establishing a first logical connection to a first wireless terminal for transmission of said single packet flow, determining at least one traffic parameter, establishing at least a second logical connection to the wireless terminal depending on said traffic parameter, for transmission of said single packet flow and transmitting the single packet flow using at least one of the first and second logical connections to the wireless terminal, selecting one of the first and second logical connections for transmission of the single packet flow to a plurality of wireless terminals including the first wireless terminal. A first plurality of logical connections including the first logical connection are a plurality of unicast connections for transmission to a plurality of wireless terminals including the first wireless terminal, wherein the second logical connection is a multicast connection for transmission to the plurality of wireless terminals including the first wireless terminal and wherein the at least one traffic parameter is a number of the plurality of wireless terminals.

The embodiments are particularly advantageous as by establishing simultaneous connections for a single packet flow between the transmitter and a receiver, it allows performing more advanced processing and handling to deliver the given single packet flow. For example, it is possible to switch from a type of connection to the other based on the reception quality and transmission speed, or to handle specific packets of the single packet flow in different ways. The network is then able for example to adapt the transmission of packets based on service priorities or based on changes in the geographical position of the mobile.

Further, the embodiments allow adapting the transmission to the changes in the characteristics of the network elements, allowing a more efficient use of the network resources. Another advantage is that the connection mode can be switched at the beginning or during the transmission of the packet flow, using a dynamic creation of logical connections.

In accordance with an embodiment of the invention, the first logical connection corresponds to a unicast connection, the second logical connection corresponds to a multicast connection for transmission to a plurality of wireless terminals including the first wireless terminal and the at least one traffic parameter corresponds to a number of the plurality of wireless terminals. This method further comprises selecting one of the first and second logical connections for transmission of the single packet flow to the wireless terminal, depending on the number of the plurality of wireless terminals.

In accordance with an embodiment of the invention, the first logical connection corresponds to a simulcast connection for transmission to a plurality of wireless terminals including the first wireless terminal inside a predefined transmission area, the second logical connection corresponds to a unicast connection, the at least one traffic parameter corresponds to a first wireless terminal location. This method further comprises selecting the unicast connections for transmission of the single packet flow, if the first wireless terminal location is not inside the predefined transmission area. One of the advantages of the method is that the terminal receives a continuous packet flow independent of its geographical location and using the best adapted connection mode to obtain a good reception quality without wasting network resources.

In accordance with an embodiment of the invention, the first logical connection and the second logical connection correspond to unicast connections to the first wireless terminal, the at least one traffic parameter correspond to a packet parameter. This method further comprises selecting on a per packet basis one or more of the unicast connections for transmission of the single packet flow to the first wireless terminal, depending on the traffic parameter. This embodiment is particularly advantageous as it allows setting two logical connections with different characteristics, sending each packet based on its specific packet parameters and improving the reception quality on the receiver side. This one or more packet parameters could be e.g. a packet priority or the type of packets. According to the inventor, this embodiment is especially useful during congestion periods of the wireless network.

In accordance with an embodiment of the invention, the wireless transmission is compliant with the WiMAX standard and the logical connection is identified with a connection ID (CID).

In another aspect, the invention relates to a wireless terminal that comprises means for establishing a first logical connection from a network element, means for establishing a second logical connection from the network element, means for receiving a packet flow of a first and second logical connection from the network element, and means for associating data packets received over the at least first and second logical connection with the single packet flow.

In accordance with an embodiment the invention relates to a network element that comprises means for establishing a first logical connection to a first wireless terminal, means for determining at least one traffic parameter, means for establishing at least a second logical connection to the first wireless terminal depending on the traffic parameter, and means for transmitting the single packet flow using at least one of the first and second logical connections to the wireless terminal.

In another aspect the invention relates to a computer program product comprising computer executable instructions, wherein the instructions are adapted to perform the steps of: establishing a first logical connection to a wireless terminal, determining at least one traffic parameter, establishing an at least second logical connection to the wireless terminal depending on the traffic parameter, and transmitting the single packet flow using at least one of the first and second logical connections to the wireless terminal.

In another aspect the invention relates to a computer program product in a wireless terminal comprising computer executable instructions, wherein the instructions are adapted to perform the steps of: establishing first logical connection from a network element, establishing second logical connection from the network element, receiving a packet flow over at least one of the first and second logical connections from the network element, and associating data packets received over at least one of the first and second logical connections with the single packet flow.

### Brief description of the drawings

In the following preferred embodiments of the invention are described in greater detail by way of example only making reference to the drawings in which:
- Fig. 1: is a block diagram of a wireless transmission method in accordance with a first preferred embodiment of the invention,
- Fig. 2: is a flow diagram illustrating a preferred embodiment of a method of the invention,
- Fig. 3: is a block diagram illustrating a second preferred embodiment of a method of the invention,
- Fig. 4: is a block diagram of a further preferred embodiment of a wireless transmission method of the invention,
- Fig. 5: is a block diagram of a further preferred embodiment of a wireless transmission method of the invention,
- Fig. 6: is a block diagram of a further preferred embodiment of a wireless transmission method of the invention.

### Detailed description

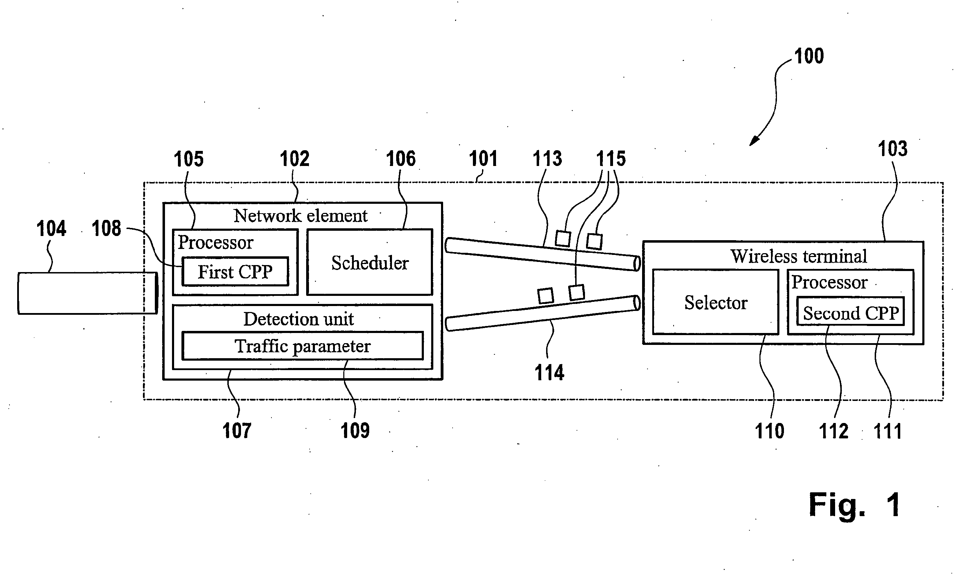

Fig. 1 shows a block diagram 100 of a wireless communication network 101 that includes a network element 102, a wireless terminal 103, and a single packet flow 104. The network element comprises a processor unit 105, a scheduler 106 and a detection unit 107. The processor unit 105 further comprises a first computer program product 108. The detection unit 107 comprises a traffic parameter 109. On the wireless terminal 103 a selector 110 and a processor unit 111 are included. This processor unit 111 further comprises a second computer program product 112.

The network element 102 establishes a first logical connection 113 with the wireless terminal 103 for transmission of the single packet flow 104. Once this first logical connection 113 has been established, the detection unit 107 determines at least one traffic parameter 109. Depending on the result of the traffic parameter 109, a second logical connection 114 may the established and the scheduler 106 will transmit the single packet flow 104 to the wireless terminal 103, using at least one of the first and second logical connections 113, 114. Alternatively, the second logical connection 114 can be established simultaneously with the first logical connection 113 at the beginning of the transmission of the single packet flow 104. The network element 102 may select at least one of the first and second logical connections for transmission of the single packet flow 104 to the wireless terminal 103, depending on the traffic parameters 109. On the wireless terminal 103 side, the selector 110 associates data packets 115 received over the at least first and second logical connections 113, 114 with the single packet flow 104.

One of the advantages of the invention is that, allowing a dynamic connection switch between the at least two connections, the network adapts better to the channel characteristics, the service provided or the required priorities of the transmission, improving the overall network performance and resources usage, as well as the quality of the reception in the wireless terminal. If the wireless communication network 101 uses for example the IEEE 802.16 standard, then the network may identify the logical connections using the Connection ID (CID). All CIDs may be transmitted using frames compliant with IEEE 802.16. The header of the frames contains a DL-MAP informing the wireless terminals of which CIDs are carried in the specific frame. The network element or base station creates several connections (CIDs) sending to the terminal (or mobile station) the 802.16 DSx messages (DSa, DSc and DSd) and informing the mobile terminal to use the same packet classification rule for the CIDs with the same packet flow. The DSa message further informs which CIDs are associated to the mobile station. Once the mobile station receives a frame, it can now learn from the frame header (DL_MAP) if one (or more) of its associated CIDs are transported in the frame.

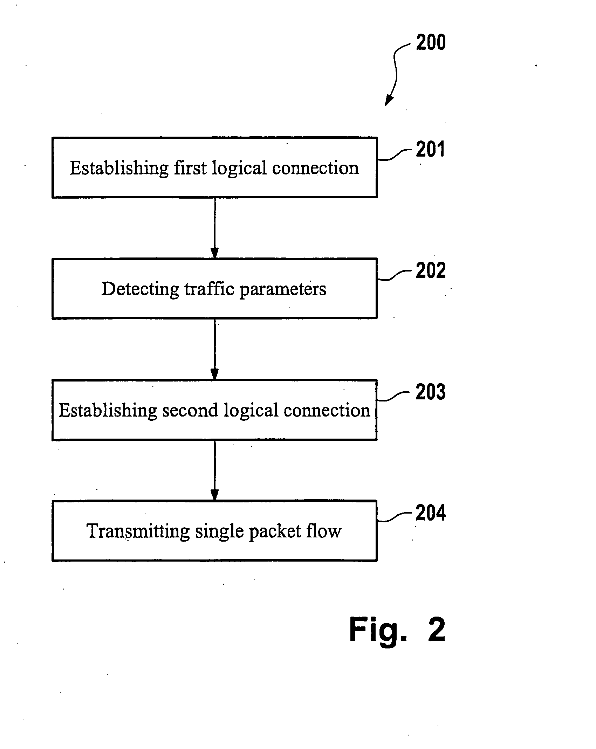

Fig. 2 shows a flow diagram 200 of the basic steps performed by a method in accordance with the invention. In step 201 a first logical connection 113 between a network element 102 and a wireless terminal 103 is established, then in 202 at least one traffic parameter 109 is determined. In a step 203 depending on the traffic parameter 109 detected on 202, a second logical connection 114 to the wireless terminal 103 is established. Then, in 204 a single packet flow 104 using at least one of the first and second logical connections to the wireless terminal 103 is transmitted.

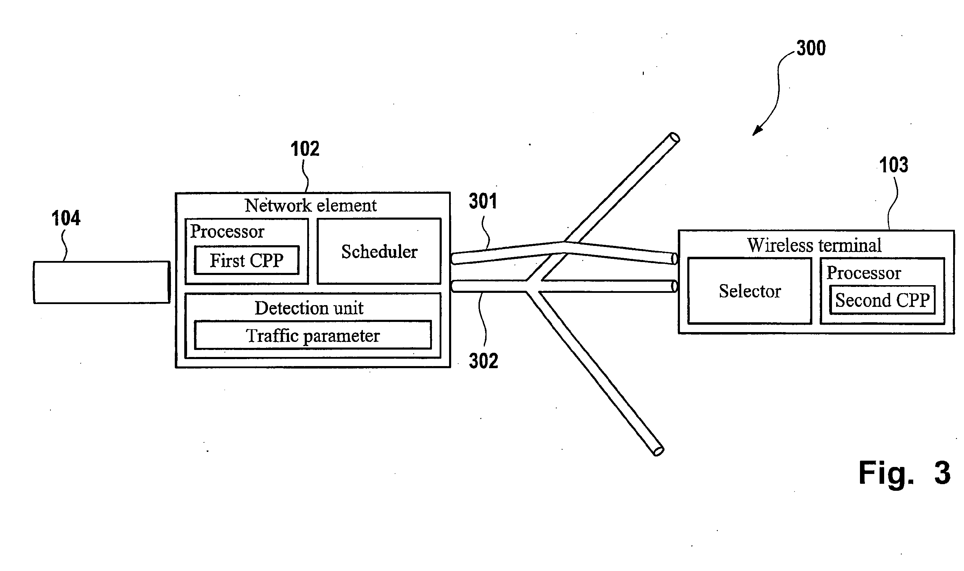

Fig. 3 shows a block diagram of the network element 102 communicating with the wireless terminal 103. The elements in the embodiment shown in fig. 3 that correspond to elements of the embodiment of fig. 1 have been designated by the same reference signals. The first logical connection 113 corresponds to a unicast connection 301 and the second logical connection 114 corresponds to a multicast connection 302, which may transmit the single packet flow 104 to other wireless terminals, apart from wireless terminal 103. If required by an element of the wireless communication network 101, the network element 102 establishes a unicast connection 301 with the wireless terminal 103 for transmission of the single packet flow 104. Then, depending on the traffic parameters 103, it may initiate a multicast connection 302 with the wireless terminal 103 and with other wireless terminals for transmission of the same single packet flow 104. The network element 102 may select between at least the unicast connection 301 and the multicast connection 302 to transmit to the wireless terminal 103, depending on the traffic parameters 109 and using the scheduler 109.

The traffic parameter 109 can be the number of wireless terminals where the single packet flow 104 is transmitted to. If the number of wireless terminals is below a predefined amount, a unicast connection will be established between the network element 102 and each of the wireless terminals, as the unicast delivers an optimum resources usage for the number of users. If the number of wireless terminals is increased to another predefined amount, a multicast connection to the wireless terminals is established as it improves the efficiency of the resources usage. When both logical connections are established between the network element 102 and the wireless terminal 103, both connections are kept active, so if the number of wireless terminals changes, the network element can switch again to transmit the single packet flow 104 using a suitable connection mode.

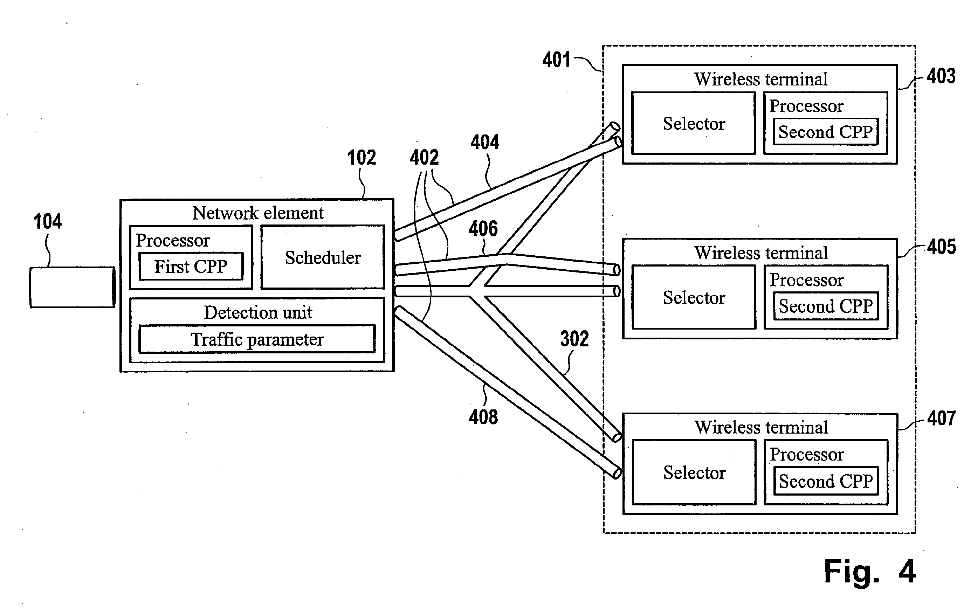

Fig. 4 shows a block diagram of the communication between the network element 102 and a plurality of wireless terminals 401. The elements in the embodiment shown in fig. 4 that correspond to elements of the embodiment of fig. 1 have been designated by the same reference signals. At least a first unicast connection 404, a second unicast 406 and a third unicast 408 are connected from the network element 102 to the wireless terminals 403, 405 and 407 respectively. A second logical connection is the multicast mode 302, connected to the wireless terminals 403,405,407. The detection unit 107 determines a traffic parameter 109 that may be the number of the plurality of wireless terminals. If the number of wireless terminals reaches a certain amount, a multicast connection to the wireless terminals is established for the transmission of the single packet flow 104. The scheduler 106 switches the connection from the unicast transmission to the multicast connection.

If for example an element of the network requires a connection with a wireless terminal 403 for transmission of the single packet flow 104, the network element 102 establishes a unicast connection 404. Then, the network element may establish a multicast connection 302 with the wireless terminal 403 as an alternative medium of transmission. Alternatively, the network element may wait for the detection unit 107 to detect, for example, at least three wireless terminals to establish the multicast connection 302. The transmission of the single packet flow 104 uses the unicast connection 404. When a request for a connection to a second wireless terminal 405 is completed, a second unicast connection 406 is established. The wireless terminal 405 is informed by the network element 102 about the multicast connection 302. The multicast connection 302 remains active but without transmitting the single packet flow 104. If a third wireless terminal 407 requires the establishment of a connection with the network element 102, then a unicast connection 408 is established and the wireless terminal 408 is informed about the multicast connection 302. When the traffic parameter reaches the predetermined value of, for example, three wireless terminals requesting the single packet flow 104, the detection unit 107 informs the scheduler 106 and it starts transmitting the single packet flow 104 using the multicast connection 302, in order to improve the efficiency of the resources usage within the wireless communication network. Alternatively, the multicast connection 302 may need to be established prior to the transmission of the packet flow 104.

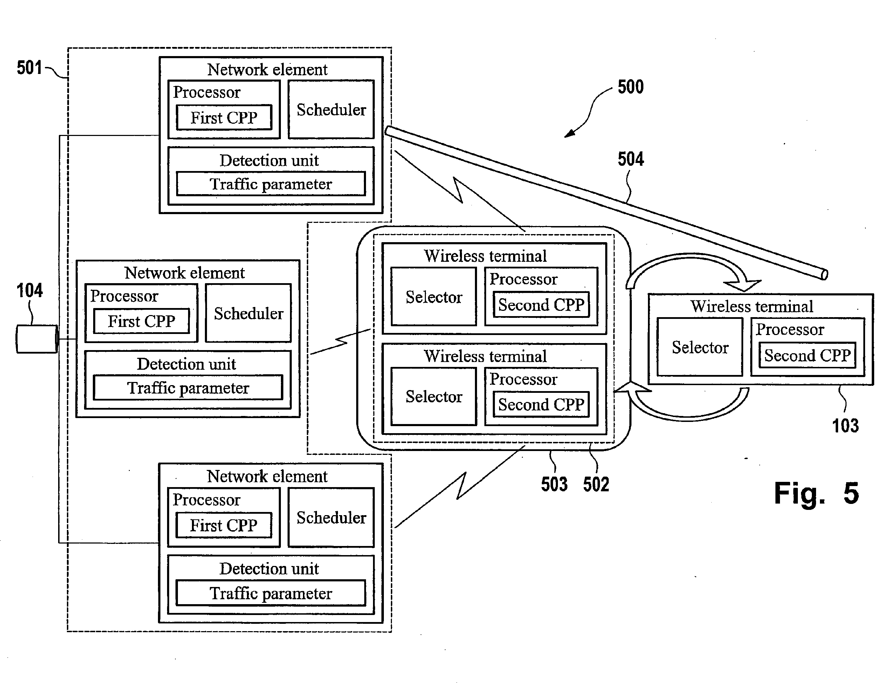

Fig. 5 shows a block diagram of the communication between a plurality of network elements 501 and a plurality of wireless terminals 502 including the first wireless terminal 103. The plurality of network elements 501 is connected to the single packet flow 104 and transmits to a predefined transmission area 503 using a simulcast connection 505. The plurality of wireless terminals 502 is located inside the predefined transmission area 503 and a first wireless terminal 103 is outside the predefined area 503. One of the network elements is outside the predefined transmission area 503 and is connected to the first wireless terminal 103 using a unicast connection 504. The elements in the embodiment shown in fig. 5 that correspond to elements of the embodiment of fig. 1 have been designated by the same reference signals.

If the wireless communication network 101 requires a plurality of network elements 501 to transmit the single packet flow 104 to the predefined transmission area 503, the plurality of network elements 501 establishes a simulcast transmission of the single packet flow to the predefined transmission area 503. The plurality of wireless terminals 502 will receive the single packet flow if they are located within the predefined transmission area. If for example the first wireless terminal 103 moves outside the predefined transmission area 503, the communication established with the network elements 501 may be dropped. In this case, a network element can establish a unicast connection 504 to the wireless terminal 103 that is located outside the predefined transmission area 503, while keeping the established logical simulcast connection in case that it returns to the predefined transmission area. The advantage of this aspect of the invention is that the user of a wireless terminal will receive a continuous stream of single packet flow when they are, for example, using a TV channel service.

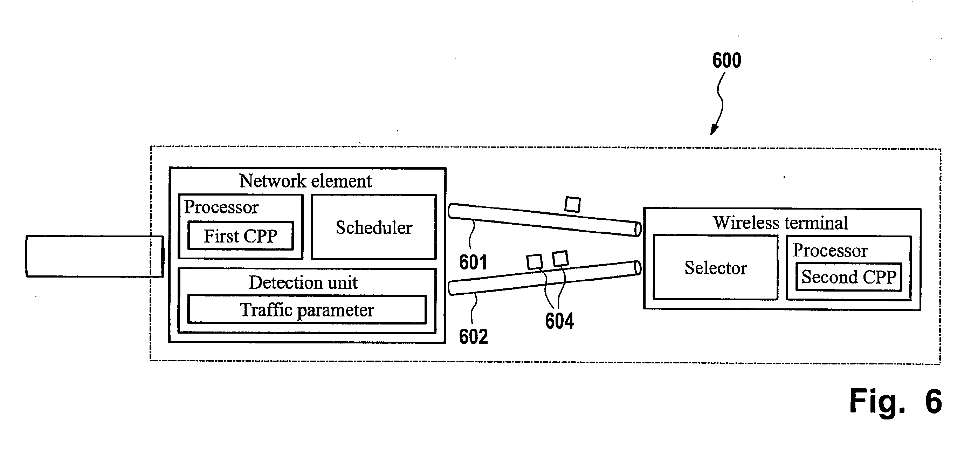

Fig. 6 shows a block diagram of the communication between a network element 102 and the wireless terminal 103. The elements in the embodiment shown in fig. 6 that correspond to elements of the embodiment of fig. 1 have been designated by the same reference signals. The first logical connection corresponds to a first unicast connection 601 and the second logical connection corresponds to a second unicast connection 602. A first type of packets 603 are sent via the first unicast connection 601 and a second type of packet 604 are sent using the second unicast connection 602. The scheduler 106 decides over what connection 601,602 to send the packet based on the traffic parameter 109. This traffic parameter can be some packet parameter as the packet prioriy or the packet type. Both types of packets belong to the same single packet flow. When a connection between the network element 102 and the wireless terminal 103 is initiated, both logical connections are established and used simultaneously for the transmission of the single packet flow 104.

If for example the single packet flow represents a video stream as H.264, MPEG-4, MPEG-2, or H.263, these are usually composed of three types of packets: I, P and B. According to the inventor, in order to improve the quality of the reception during congestion periods, it is recommended to transmit the I and B packets over for example the unicast connection 601 with good error protection (e.g. FEC or H-ARQ) and robust modulation (e.g. QPSK 3/4), while the B frames can be transmitted over the second unicast connection 602 with less robust modulation (e.g. QPSK 3/4) and coding, and with faster data transmission rate. The scheduler 106 will decide, on a per packet basis, which packets should be transmitted over the more secure connection and which packets should be delivered to a less robust but faster transmission. The detection unit 106 that determines the traffic parameter 109 can decide, based on the parameters of the packet, over which connection it should be sent to. One of the advantages of the embodiment is that the at least two logical connections 601,602 can be established with different transmission characteristics, using different modulation orders, modulation types, error protections or coding schemes, allowing different speeds and robust transmissions. Therefore, the packets will be sent over the logical connection that is best adapted to packet parameters and the service characteristics.

### List of reference numerals

- 100: Block diagram
- 101: Wireless communication network
- 102: Network element
- 103: Wireless terminal
- 104: Single packet flow
- 105: Processor unit
- 106: Scheduler
- 107: Detection unit
- 108: First computer program product
- 109: Traffic parameter
- 110: Selector
- 111: Processor unit
- 112: Second computer program product
- 113: First logical connection
- 114: Second logical connection
- 115: Packets
- 220: Flow chart
- 301: Unicast connection
- 302: Multicast connection
- 401: Plurality of wireless terminals
- 402: Plurality of unicast connections
- 403: First wireless terminal
- 404: First unicast connection
- 405: Second wireless terminal
- 406: Second unicast connection
- 407: Third wireless terminal
- 408: Third unicast connection
- 500: Simulcast/unicast connection
- 501: Plurality of network elements
- 502: Plurality of wireless terminals
- 503: Predefined transmission area
- 504: Unicast connection
- 505: Simulcast connection
- 600: Unicast/unicast connection
- 601: First unicast connection
- 602: Second unicast connection
- 603: First type of packets
- 604: Second type of packets

## Claims

1. A method for wireless transmission of a single packet flow (104) from a network element (102), comprising:
- establishing a first logical connection (113) to a first wireless terminal (103) for transmission of said single packet flow (104),
- determining at least one traffic parameter (109),
- establishing at least a second logical connection (114) to said first wireless terminal (103), depending on said traffic parameter (109), for transmission of said single packet flow (104),
- transmitting said single packet flow (104) using at least one of said first and second logical connections (113,114) to said wireless terminal (103),
- selecting one of the first and second logical connections (113,114) for transmission of the single packet flow (104) to a plurality of wireless terminals (401) including said first wireless terminal (103), depending on the number of said plurality of wireless terminals (401),
**characterised in that**:
a first plurality of logical connections including said first logical connection (113) are a plurality of unicast connections (402) for transmission to a plurality of wireless terminals (401) including said first wireless terminal (103),
the second logical connection (114) is a multicast connection (302) for transmission to said plurality of wireless terminals (401) including said first wireless terminal (103) and the at least one traffic parameter (109) is a number of said plurality of wireless terminals (401).

2. The method as in claim 1, wherein the first logical connection (113) is a unicast connection (301), wherein the second logical connection (114) is a multicast connection (302) for transmission to a plurality of wireless terminals (401) including said first wireless terminal (103) and wherein the at least one traffic parameter (103) is a number of said plurality of wireless terminals (401), said method further comprising:
selecting one of the first and second logical connections (113,114) for transmission of the single packet flow (104) to said wireless terminal (103), depending on the number of said plurality of wireless terminals (401).

3. A method as claimed in claim 1, wherein the wireless transmission network (101) is compliant with the WiMAX standard and the at least first and second logical connections (113,114) are identified with a Connection ID, CID.

4. A wireless terminal (103) comprising:
- means for establishing a first logical connection (113) from a network element (102),
- means for establishing a second logical connection (114) from said network element (102),
- means for receiving a single packet flow (104) over first and second logical connection (113,114) from said network element (102),
- means for associating data packets (603,604) received over the at least said first and second logical connections (113,114) with said single packet flow,
- means for receiving said single packet flow (104) over one of said first and second logical connections (113,114) depending on a number of a plurality of wireless terminals including said wireless terminal (401),
**characterised in that**:
a first plurality of logical connections including said first logical connection (113) are a plurality of unicast connections (402) for transmission to a plurality of wireless terminals (401) including said wireless terminal (103),
the second logical connection (114) is a multicast connection (302) for transmission to said plurality of wireless terminals (401) including said wireless terminal (103) and the at least one traffic parameter (109) is a number of said plurality of wireless terminals (401).

5. A network element comprising (102):
- means for establishing a first logical connection (113) to a first wireless terminal (103),
- means for determining at least one traffic parameter (109),
- means for establishing at least a second logical connection (114) to said first wireless terminal (103), depending on said traffic parameter (109),
- means for transmitting said single packet flow (104) using at least one of said first and second logical connections (113,114) to said wireless terminal (103),
- selecting one of said first and second logical connections (113,114) for transmission of said single packet flow (104) to a plurality of wireless terminals (401) including said first wireless terminal (103), depending on a number of said plurality of wireless terminals (401),
**characterised in that**:
a first plurality of logical connections including said first logical connection (113) are a plurality of unicast connections (402) for transmission to a plurality of wireless terminals (401) including said first wireless terminal (103),
the second logical connection (114) is a multicast connection (302) for transmission to said plurality of wireless terminals (401) including said first wireless terminal (103) and the at least one traffic parameter (109) is a number of said plurality of wireless terminals (401).

6. A computer program product (108) in a network element comprising computer executable instruction, said instructions being adapted to perform the steps:
- establishing a first logical connection (113) to a wireless terminal (103),
- determining at least one traffic parameter (109),
- establishing an at least second logical connection (114) to said wireless terminal (103), depending on said traffic parameter (109),
- transmitting said single packet flow (104) using at least one of said first and second logical connections (113,114) to said wireless terminal (103),
- selecting one of the first and second logical connections (113,114) for transmission of the single packet flow (104) to a plurality of wireless terminals (401) including said first wireless terminal (103), depending on the number of said plurality of wireless terminals (401),
**characterised in that**:
a first plurality of logical connections including said first logical connection (113) are a plurality of unicast connections (402) for transmission to a plurality of wireless terminals (401) including said first wireless terminal (103),
the second logical connection (114) is a multicast connection (302) for transmission to said plurality of wireless terminals (401) including said first wireless terminal (103) and the at least one traffic parameter (109) is a number of said plurality of wireless terminals (401).

7. A computer program product (112) in a wireless terminal (103) comprising computer executable instruction, said instructions being adapted to perform the steps:
- establishing first logical connection (113) from a network element (102),
- establishing second logical connection (114) from said network element (102),
- receiving a single packet flow (104) over at least one of said first and second logical connections (113,114) from said network element (102),
- associating data packets (115) received over at least one of said first and second logical connections (113,114) with said single packet flow (104),-receiving said single packet flow (104) over at least one of said first and second logical connections (113,114) depending on a number of said plurality of wireless terminals including said wireless terminal (401),
**characterised in that**:
a first plurality of logical connections including said first logical connection (113) are a plurality of unicast connections (402) for transmission to a plurality of wireless terminals (401) including said wireless terminal (103),
the second logical connection (114) is a multicast connection (302) for transmission to said plurality of wireless terminals (401) including said wireless terminal (103) and the at least one traffic parameter (109) is a number of said plurality of wireless terminals (401).

## Patentansprüche

1. Ein Verfahren zur drahtlosen Übertragung eines einzelnen Paketstroms (104) von einem Netzwerkelement (102), umfassend:
Aufbauen einer ersten logischen Verbindung (113) zu einem drahtlosen Endgerät (103) für die Übertragung des besagten einzelnen Paketstroms (104),
Ermitteln mindestens eines Verkehrsparameters (109),
- Aufbauen mindestens einer zweiten logischen Verbindung (114) zu dem besagten ersten drahtlosen Endgerät (103) in Abhängigkeit von dem besagten Verkehrsparameter (109) für die Übertragung des besagten einzelnen Paketstroms (104),
Übertragen des besagten einzelnen Paketstroms (104) unter Verwendung mindestens entweder der besagten ersten oder der besagten zweiten logischen Verbindung (113,114) an das besagte drahtlose Endgerät (103),
Auswählen entweder der ersten oder der zweiten logischen Verbindung (113,114) für die Übertragung des einzelnen Paketstroms (104) an eine Mehrzahl von drahtlosen Endgeräten (401), einschließlich des besagten ersten drahtlosen Endgerätes (103), in Abhängigkeit von der Anzahl der besagten Mehrzahl von drahtlosen Endgeräten (401), **dadurch gekennzeichnet, dass**:
Eine erste Mehrzahl von logischen Verbindungen, einschließlich der besagten ersten logischen Verbindung (113), eine Mehrzahl von Unicast-Verbindungen (402) für die Übertragung an eine Mehrzahl von drahtlosen Endgeräten (401), einschließlich des besagten ersten drahtlosen Endgerätes (103), ist, und die zweite logische Verbindung (114) eine Multicast-Verbindung (302) für die Übertragung an die besagte Mehrzahl von drahtlosen Endgeräten (401), einschließlich des besagten ersten drahtlosen Endgerätes (103), ist, und der mindestens eine Verkehrsparameter (109) eine Anzahl der besagten Mehrzahl von drahtlosen Endgeräten (401) ist.

2. Das Verfahren nach Anspruch 1, wobei die erste logische Verbindung (113) eine Unicast-Verbindung (301) ist, wobei die zweite logische Verbindung (114) eine Multicast-Verbindung (302) für die Übertragung an eine Mehrzahl von drahtlosen Endgeräten (401), einschließlich des besagten ersten drahtlosen Endgerätes (103), ist, und wobei der mindestens eine Verkehrsparameter (103) eine Anzahl der besagten Mehrzahl von drahtlosen Endgeräten (401) ist, wobei das Verfahren weiterhin umfasst:
Auswählen entweder der ersten oder der zweiten logischen Verbindung (113,114) für die Übertragung eines einzelnen Paketstroms (104) an das besagte drahtlose Endgerät (103), in Abhängigkeit von der Anzahl der besagten Mehrzahl von drahtlosen Endgeräten (401).

3. Ein Verfahren nach Anspruch 1, wobei das drahtlose Übertragungsnetzwerk (101) dem WiMAX-Standard entspricht und die mindestens erste und zweite logische Verbindungen (113,114) anhand einer Verbindungs-ID, CID, identifiziert werden.

4. Ein drahtloses Endgerät (103), umfassend:
Mittel zum Aufbauen einer ersten logischen Verbindung (113) von einem Netzwerkelement (102),
Mittel zum Aufbauen einer zweiten logischen Verbindung (114) von dem besagten Netzwerkelement (102),
M ittel zum Empfangen eines einzelnen Paketstroms (104) über die erste und die zweite logische Verbindung (113,114) von dem besagten Netzwerkelement (102),
M ittel zum Assoziieren von über die besagte mindestens erste und die besagte mindestens zweite logische Verbindung (113, 114) empfangenen Datenpaketen (603,604) mit dem besagten einzelnen Paketstrom,
M ittel zum Empfangen des besagten einzelnen Paketstroms (104) über entweder die besagte erste oder die besagte zweite logische Verbindung (113,114) in Abhängigkeit von einer Anzahl einer Mehrzahl von drahtlosen Endgeräten, einschließlich des besagten drahtlosen Endgerätes (401), **dadurch gekennzeichnet, dass**:
Eine erste Mehrzahl von logischen Verbindungen, einschließlich der besagten ersten logischen Verbindung (113), eine Mehrzahl von Unicast-Verbindungen (402) für die Übertragung an eine Mehrzahl von drahtlosen Endgeräten (401), einschließlich des besagten drahtlosen Endgerätes (103), ist,
die zweite logische Verbindung (114) eine Multicast-Verbindung (302) für die Übertragung an die besagte Mehrzahl von drahtlosen Endgeräten (401),
einschließlich des besagten drahtlosen Endgerätes (103), ist, und dass der mindestens eine Verkehrsparameter (109) eine Anzahl der besagten Mehrzahl von drahtlosen Endgeräten (401) ist.

5. Ein Netzwerkelement (102), umfassend:
Mittel zum Aufbauen einer ersten logischen Verbindung (113) zu einem ersten drahtlosen Endgerät (103),
Mittel zum Bestimmen mindestens eines Verkehrsparameters (109),
Mittel zum Aufbauen mindestens einer zweiten logischen Verbindung (114) zu dem besagten ersten drahtlosen Endgerät (103) in Abhängigkeit von dem besagten Verkehrsparameter (109),
Mittel zum Übertragen des besagten einzelnen Paketstroms (104), unter Verwendung mindestens entweder der besagten ersten oder der besagten zweiten logischen Verbindung (113,114), an das besagte drahtlose Endgerät (103),
Auswählen entweder der besagten ersten oder der besagten zweiten logischen Verbindung (113,114) für die Übertragung des besagten einzelnen Paketstroms (104) an eine Mehzahl von drahtlosen Endgeräten (401), einschließlich des besagten ersten drahtlosen Endgerätes (103), in Abhängigkeit von einer Anzahl der besagten Mehrzahl von drahtlosen Endgeräten (401), **dadurch gekennzeichnet, dass**:
Eine erste Mehrzahl von logischen Verbindungen, einschließlich der besagten ersten logischen Verbindung (113), eine Mehrzahl von Unicast-Verbindungen (402) für die Übertragung an eine Mehrzahl von drahtlosen Endgeräten (401), einschließlich des besagten ersten drahtlosen Endgerätes (103), ist,
die zweite logische Verbindung (114) eine Multicast-Verbindung (302) für die Übertragung an die besagte Mehrzahl von drahtlosen Endgeräten (401), einschließlich des besagten ersten drahtlosen Endgerätes (103), ist, und dass der mindestens eine Verkehrsparameter (109) eine Anzahl der besagten Mehrzahl von drahtlosen Endgeräten (401) ist.

6. Ein Computerprogramm-Produkt (108) in einem Netzwerkelement, umfassend computerausführbare Befehle, wobei die besagten Befehle für das Ausführen der folgenden Schritte bestimmt sind:
Aufbauen einer ersten logischen Verbindung (113) zu einem drahtlosen Endgerät (103),
Bestimmen mindestens eines Verkehrsparameters (109),
Aufbauen mindestens einer zweiten logischen Verbindung (114) zu dem besagten drahtlosen Endgerät (103) in Abhängigkeit von dem besagten Verkehrsparameter (109),
Übertragen des besagten einzelnen Paketstroms (104), unter Verwendung mindestens entweder der besagten ersten oder der besagten zweiten logischen Verbindung (113,114), an das besagte drahtlose Endgerät (103),
Auswählen entweder der besagten ersten oder der besagten zweiten logischen Verbindung (113,114) für die Übertragung des besagten einzelnen Paketstroms (104) an eine Mehrzahl von drahtlosen Endgeräten (401), einschließlich des besagten ersten drahtlosen Endgerätes (103), in Abhängigkeit von einer Anzahl der besagten Mehrzahl von drahtlosen Endgeräten (401), **dadurch gekennzeichnet, dass**:
Eine erste Mehrzahl von logischen Verbindungen, einschließlich der besagten ersten logischen Verbindung (113), eine Mehrzahl von Unicast-Verbindungen (402) für die Übertragung an eine Mehrzahl von drahtlosen Endgeräten (401), einschließlich des besagten ersten drahtlosen Endgerätes (103), ist,
die zweite logische Verbindung (114) eine Multicast-Verbindung (302) für die Übertragung an die besagte Mehrzahl von drahtlosen Endgeräten (401),
einschließlich des besagten ersten drahtlosen Endgerätes (103), ist, und dass der mindestens eine Verkehrsparameter (109) eine Anzahl der besagten Mehrzahl von drahtlosen Endgeräten (401) ist.

7. Ein Computerprogramm-Produkt (112) in einem drahtlosen Endgerät (103), umfassend computerausführbare Befehle, wobei die besagten Befehle für das Ausführen der folgenden Schritte bestimmt sind:
- Aufbauen einer ersten logischen Verbindung (113) von einem Netzwerkelement (102),
- Aufbauen einer zweiten logischen Verbindung (114) von dem besagten Netzwerkelement (102),
- Empfangen eines einzelnen Paketstroms (104) über mindestens entweder die erste oder die zweite logische Verbindung (113,114) von dem besagten Netzwerkelement (102),
- Assoziieren von über mindestens entweder die besagte erste oder die besagte zweite logische Verbindung (113, 114) empfangenen Datenpaketen (115) mit dem besagten einzelnen Paketstrom (104),
- Empfangen des besagten einzelnen Paketstroms (104) über entweder die besagte erste oder die besagte zweite logische Verbindung (113,114) in Abhängigkeit von einer Anzahl der Mehrzahl von drahtlosen Endgeräten, einschließlich des besagten drahtlosen Endgerätes (401), **dadurch gekennzeichnet, dass**:
Eine erste Mehrzahl von logischen Verbindungen, einschließlich der besagten ersten logischen Verbindung (113), eine Mehrzahl von Unicast-Verbindungen (402) für die Übertragung an eine Mehrzahl von drahtlosen Endgeräten (401), einschließlich des besagten drahtlosen Endgerätes (103), ist,
die zweite logische Verbindung (114) eine Multicast-Verbindung (302) für die Übertragung an die besagte Mehrzahl von drahtlosen Endgeräten (401), einschließlich des besagten drahtlosen Endgerätes (103), ist, und dass der mindestens eine Verkehrsparameter (109) eine Anzahl der besagten Mehrzahl von drahtlosen Endgeräten (401) ist.

## Revendications

1. Procédé de transmission sans fil d'un flux de paquets unique (104) depuis un élément de réseau (102), comprenant :
l'établissement d'une première connexion logique (113) vers un premier terminal sans fil (103) pour la transmission dudit flux de paquets unique (104),
la détermination d'au moins un paramètre de trafic (109),
l'établissement d'au moins une deuxième connexion logique (114) vers ledit premier terminal sans fil (103) en fonction dudit paramètre de trafic (109) pour la transmission dudit flux de paquets unique (104),
la transmission dudit flux de paquets unique (104) en utilisant au moins l'une desdites première et deuxième connexions logiques (113, 114) vers ledit terminal sans fil (103),
la sélection de l'une parmi la première et la deuxième connexions logiques (113, 114) pour la transmission du flux de paquets unique (104) vers une pluralité de terminaux sans fil (401) comprenant ledit premier terminal sans fil (103), en fonction du nombre desdits terminaux parmi la pluralité de terminaux sans fil (401), **caractérisé en ce que :**
une première pluralité de connexions logiques comprenant ladite première connexion logique (113) est une pluralité de connexions monodiffusion (402) pour la transmission vers une pluralité de terminaux sans fil (401) comprenant ledit premier terminal sans fil (103),
la deuxième connexion logique (114) est une connexion multidiffusion (302) pour la transmission vers ladite pluralité de terminaux sans fil (401) comprenant ledit premier terminal sans fil (103) et l'au moins un paramètre de trafic (109) est un nombre de ladite pluralité de terminaux sans fil (401).

2. Procédé selon la revendication 1, dans lequel la première connexion logique (113) est une connexion monodiffusion (301), dans lequel la deuxième connexion logique (114) est une connexion multidiffusion (302) pour la transmission vers une pluralité de terminaux sans fil (401) comprenant ledit premier terminal sans fil (103) et dans lequel l'au moins un paramètre de trafic (109) est un nombre de ladite pluralité de terminaux sans fil (401), ledit procédé comprenant en outre :
la sélection de l'une parmi la première et la deuxième connexions logiques (113, 114) pour la transmission du flux de paquets unique (104) vers ledit terminal sans fil (103), en fonction du nombre de ladite pluralité de terminaux sans fil (401).

3. Procédé selon la revendication 1, dans lequel le réseau de transmission sans fil (101) est conforme à la norme WiMAX et lesdites première et deuxième connexions logiques (113, 114) sont identifiées par un ID de connexion, CID.

4. Terminal sans fil (103) comprenant :
moyens pour établir une première connexion logique (113) depuis un élément de réseau (102),
moyens pour établir une deuxième connexion logique (114) depuis ledit élément de réseau (102),
- moyens pour recevoir un flux de paquets unique (104) sur la première et la deuxième connexions logiques (113, 114) depuis ledit élément de réseau (102),
- moyens pour associer les paquets de données (603, 604) reçus sur lesdites au moins première et deuxième connexions logiques (113, 114) audit flux de paquets unique,
- moyens pour recevoir ledit flux de paquets unique (104) sur l'une desdites première et deuxième connexions logiques (113, 114) en fonction d'un nombre d'une pluralité de terminaux sans fil comprenant ledit terminal sans fil (401), **caractérisé en ce que :**
une première pluralité de connexions logiques comprenant ladite première connexion logique (113) est une pluralité de connexions monodiffusion (402) pour la transmission vers une pluralité de terminaux sans fil (401) comprenant ledit terminal sans fil (103),
la deuxième connexion logique (114) est une connexion multidiffusion (302) pour la transmission à ladite pluralité de terminaux sans fil (401) comprenant ledit terminal sans fil (103) et l'au moins un paramètre de trafic (109) est un nombre de ladite pluralité de terminaux sans fil (401).

5. Élément de réseau (102), comprenant :
moyens pour établir une première connexion logique (113) vers un terminal sans fil (103),
moyens pour déterminer au moins un paramètre de trafic (109),
moyens pour établir au moins une deuxième connexion logique (114) vers ledit premier terminal sans fil (103) en fonction dudit paramètre de trafic (109),
moyens pour transmettre ledit flux de paquets unique (104) en utilisant au moins l'une desdites première et deuxième connexions logiques (113, 114) vers ledit terminal sans fil (103),
sélection de l'une parmi lesdites première et deuxième connexions logiques (113, 114) pour la transmission dudit flux de paquets unique (104) vers une pluralité de terminaux sans fil (401) comprenant ledit premier terminal sans fil (103), en fonction du nombre de ladite pluralité de terminaux sans fil (401), **caractérisé en ce que :**
une première pluralité de connexions logiques comprenant ladite première connexion logique (113) est une pluralité de connexions monodiffusion (402) pour la transmission vers une pluralité de terminaux sans fil (401) comprenant ledit premier terminal sans fil (103),
la deuxième connexion logique (114) est une connexion multidiffusion (302) pour la transmission vers ladite pluralité de terminaux sans fil (401) comprenant ledit premier terminal sans fil (103) et l'au moins un paramètre de trafic (109) est un nombre de ladite pluralité de terminaux sans fil (401).

6. Produit de programme informatique (108) dans un élément de réseau comprenant des instructions exécutables par un ordinateur, lesdites instructions étant adaptées pour réaliser les étapes suivantes :
l'établissement d'une première connexion logique (113) vers un terminal sans fil (103),
la détermination d'au moins un paramètre de trafic (109),
- l'établissement d'au moins une deuxième connexion logique (114) vers ledit premier terminal sans fil (103) en fonction dudit paramètre de trafic (109),
la transmission dudit flux de paquets unique (104) en utilisant au moins l'une desdites première et deuxième connexions logiques (113, 114) vers ledit terminal sans fil (103),
- la sélection de l'une parmi la première et la deuxième connexions logiques (113, 114) pour la transmission du flux de paquets unique (104) vers une pluralité de terminaux sans fil (401) comprenant ledit premier terminal sans fil (103), en fonction du nombre de ladite pluralité de terminaux sans fil (401), **caractérisé en ce que :**
une première pluralité de connexions logiques comprenant ladite première connexion logique (113) est une pluralité de connexions monodiffusion (402) pour la transmission vers une pluralité de terminaux sans fil (401) comprenant ledit premier terminal sans fil (103),
la deuxième connexion logique (114) est une connexion multidiffusion (302) pour la transmission vers ladite pluralité de terminaux sans fil (401) comprenant ledit premier terminal sans fil (103) et l'au moins un paramètre de trafic (109) est un nombre de ladite pluralité de terminaux sans fil (401).

7. Produit de programme informatique (112) dans un terminal sans fil (103) comprenant des instructions exécutables par un ordinateur, lesdites instructions étant adaptées pour réaliser les étapes suivantes :
l'établissement d'une première connexion logique (113) depuis un élément de réseau (102),
l'établissement d'une deuxième connexion logique (114) depuis ledit élément de réseau (102),
la réception d'un flux de paquets unique (104) sur au moins l'une desdites première et deuxième connexions logiques (113, 114) depuis ledit élément de réseau (102),
l'association de paquets de données (115) reçus sur au moins l'une desdites première et deuxième connexions logiques (113, 114) audit flux de paquets unique (104) sur au moins l'une desdites première et deuxième connexions logiques (113, 114) en fonction d'un nombre de ladite pluralité de terminaux sans fil comprenant ledit terminal sans fil (401), **caractérisé en ce que :**
une première pluralité de connexions logiques comprenant ladite première connexion logique (113) est une pluralité de connexions monodiffusion (402) pour la transmission vers une pluralité de terminaux sans fil (401) comprenant ledit premier terminal sans fil (103),
la deuxième connexion logique (114) est une connexion multidiffusion (302) pour la transmission vers ladite pluralité de terminaux sans fil (401) comprenant ledit premier terminal sans fil (103) et l'au moins un paramètre de trafic (109) est un nombre de ladite pluralité de terminaux sans fil (401).
